## Europäisches Patentamt
## European Patent Office
## Office européen des brevets

(11) Publication number: **0 088 574**
**B1**

# EUROPEAN PATENT SPECIFICATION

(45) Date of publication of patent specification: **25.06.86**

(51) Int. Cl.⁴: **A 23 K 1/18, A 23 P 1/00**

(21) Application number: **83301066.3**

(22) Date of filing: **28.02.83**

(54) **Animal foodstuff.**

(30) Priority: **05.03.82 GB 8206520**

(43) Date of publication of application:
**14.09.83 Bulletin 83/37**

(45) Publication of the grant of the patent:
**25.06.86 Bulletin 86/26**

(84) Designated Contracting States:
**BE DE FR GB IT NL SE**

(56) References cited:
**DE-A-2 227 531**
**DE-A-2 553 576**
**GB-A-1 346 966**
**US-A-3 541 946**
**US-A-3 764 715**
**US-A-3 883 672**

(73) Proprietor: **Quaker France S.A.**
**40 boulevard de Dunkerque**
**F-13002 Marseille (FR)**

(72) Inventor: **Smith, John Royston**
**3, Battlemead Close**
**Maidenhead Berkshire (GB)**
Inventor: **Fischer, Gerhard Otto Josef**
**"Cheam" Gold Hill East**
**Gerrards Cross Buckinghamshire (GB)**

(74) Representative: **Clifford, Frederick Alan et al**
**MARKS & CLERK 57/60 Lincoln's Inn Fields**
**London WC2A 3LS (GB)**

EP 0 088 574 B1

Courier Press, Leamington Spa, England.

## Description

This invention relates to foodstuffs for animals, and particularly but not exclusively to dog food.

Dog food is available as moist, semi-moist or dry dog food. The first category is usually (not invariably) canned. Dry dog food, however, is cheaper to make and store, and is usually sold in packets or sacks as hard biscuit-like lumps.

These hard lumps, although compounded from milled cereals and proteinaceous meal to be a composite food, have certain disadvantages. Thus, they are not always suitable for small dogs, or older dogs with deteriorating teeth, since they require some force to break them into suitable fragments for swallowing. Also, they can lack palatability for dogs, since there is some restriction on the components which can be introduced. It is therefore commonplace to use the relatively cheap dry dog food as an extended or supplement to a more expensive moist dog food, especially for larger breeds of dog.

To improve the attraction of dry dog food it has been proposed to form annular pieces of such food, of say 2—3 cm diameter, with a central core of different foodstuff. However, the nature of such central core is limited since it must be substantially solid and not unacceptable in smell, or appearance or handling to the dog owner. In particular, it should not be liquid or sticky in consistency, nor should it cause the cereal component to become microbiologically unstable by moisture migration. Often modification to the cereal outer component is necessary to offset the effects of such moisture migration.

The present invention is based on the realisation that a dry dog food of improved breakability, which is attractive to dogs by smell, taste and texture, can be made as a clean, low-density filled-shell product which can be stored and handled without unpleasant odour to humans.

Filled envelopes of pastry or like material, with moist fillings, are of course well-known in human nutrition, as shown for example in U.S. Patents 3 541 946 and 3 764 715 which describes small filled cereal shells and their mass-production. These shells have a first formulation of milled cereal, not containing proteinaceous meal, and a second syrup-like liquid formulation, of higher moisture content than the cereal formulation, placed therein prior to drying. They are stored to be crisp and hygienic for human nutrition. Such technology, however, is unsuitable for the present invention relating to animal food; the proteinaceous meal promotes bacterial growth if moist, and the product must remain more permanently crisp. We have found that these ends can be achieved by using a soft filler formulation in which the water (if any) is lower than that of the shell formulation, the complete opposite of the standard practice for human food.

An animal food formulation described in GB 1 346 966 has been described in shell form. However, this is again totally different. GB 1 346 966 describes a predominantly cereal shell which may contain some protein meal. It has a moist filling also possibly including a protein meal component, i.e. it is a form of animal ravioli, disguising less appetising minerals or medicines internally. Specific reference is made to the problem of bacterial spoilage for moist grades of product. Dry goods are uniformly dry throughout.

In one aspect the invention provides an animal food consisting of units comprising a first animal food formulation and a second animal food formulation of different composition, characterised in that the first animal food formulation includes a separate proteinaceous meal together with a milled cereal and is shaped as a hard closed external shell and in that the second animal food formulation is of a different degree of subdivision or consistency from the first, occupies at least part of the internal space defined by the external shell and is of a lower water content than the shell. For example, the second formulation may be powder although it is usually a softer, or even liquid material. Although the invention is preferably formulated as a dog food, it can also be used for cat foods, or in foods or food supplements for farm animals, in menagerie feeding stuffs, or in foodstuffs, especially of controlled composition, for animals in research establishments.

The hard closed external shell can be of any shape. However, as described below in more detail, it is convenient to make the shells by a process involving extrusion of a moist tube of the first formulation and then crimping and cutting this tube at intervals. Thus, the shell is preferably of a generally square or rectangular appearance, and may be somewhat pillow-shaped or cushion-shaped with two parallel sealed edges which have visible crimping. A generally square shell of 2 to 3 cms edge length will be found convenient.

The proportions of the shell can vary in dependence on its basic shape and formulation. For a cushion-shaped, generally square, shell the maximum overall thickness can be for example from 1/4 to 2/3 its edge length, but is usually about half. The wall thickness can be such that the maximum separation between internal opposed faces of such a square shell is e.g. from one to four times the wall thickness, usually from one to two times. In absolute terms, the thickness can for example be from 3 to 8 mm, usually about 5 mm.

The first animal food formulation can vary widely in proportion as between the components. Indeed, it is an advantage of the present invention that if market cost or availability of the usual components of the first formulation should alter, the total mix of food can still retain its food values by suitable alteration of the amount or nature of the second formulation. Because of the sealed nature of the product, this does not alter the smell, appearance of handling qualities of the foodstuff, at least not to the human senses. However, usually the weight proportions as between the cereal and proteinaceous components will vary between 30:70 (e.g. 50:50) and 90:10 (e.g. 80:20). The milled cereal component usually predominates, and is often wheat flour, though flour from other cereals (oats, maize, rye, etc) could be used. Additionally or alternatively the proteinaceous component con comprise animal protein meal and/or vegetable protein meal, e.g. meat meal, fish meal, meat-and-bone meal, etc., from a wide variety of sources, usually in predominant admixture with a vegetable protein meal such as soya flour.

The hard shell defines an internal space which can be wholly filled with second formulation but is more usually only partly filled, since this appears to help ease of breakage by the animal and also improves the bulk volume of the product so that, volume by volume, it need be no more expensive than prior art products made by simpler methods. Thus, the extent to which the internal space is filled may vary from, say, one or two percent to ninety percent. Usually, it is from 5 to 50% e.g. 10 to 30% filled.

The second food formulation can be a powder; more usually, however, it can range from a liquid through a sticky or gelled formulation via a cheesy or chewy consistency to a stiff gummy layer, provided it is generally softer than the first formulation. It can be a uniform internal coating, but more usually, as a consequence of the preferred method of production described below, it forms an accumulation towards one end of the internal space.

The composition of this second food formulation can similarly vary over a wide range. It can include sugars, e.g. corn syrups, glucose or sucrose, as a syrup or gum component. It can also include glycerine. It will often include meat meals, or meat extracts, or yeast extracts, or possibly fish products. Cheese and like dairy products or byproducts can also be present. Vegetable extracts or powders can be included. Flavourings, odorants, colourings, vitamins and similar minor components are often included. Generally speaking it is preferred to use material which an animal can detect by smell even through the envelope but which to a human is undetectable or at least not unpleasant. However, the total enclosure by the envelope means that a variety of materials and changes of material can be used with consistent results.

In another aspect the invention provides a method for the production of a food, of the type in which:—

a first cereal-containing formulation is mixed with water to give an extrudable consistency;

a second formulation is made up in an extrudable or injectable consistency; the first formulation is extruded as a tube into which the second formulation is extruded or injected so as to be located within the tube and

the tube and contents are passed into sealing and severing means whereby a plurality of moist external shells of the first formulation, enclosing a portion of the second formulation, are severed from the tube, and subsequently dried: characterised in that, for production of an animal food the first formulation contains a milled cereal and a separate proteinaceous meal and the water content if any of the second formulation is less than that of the first formulation whereby drying provides hard shells the softer internal formulation of which is still of lower water content than that of the shell envelope.

In the method of the invention the water content of the filling is lower than that of the casing. This means that as the filled shell is dried, the filling does not yield water to the shell, so that the shell remains crisp and is not subject to mould growth which would otherwise be the case i.e. with water content over 15% by weight unless expensive humectants are incorporated.

Other preferred features of the method will be apparent from the above discussion. It is convenient for the tube to be extruded vertically downwards, into sealing and severing means constituted by opposed pairs of blades protruding from two parallel rollers, and preferably having corrugated edges to crimp the sealing line. In such a case the tube extrusion speed will generally match the roller peripheral speed. The second formulation can be injected or extruded vertically downwards inside the tube, e.g. as a liquid to accumulate at the base of the tube immediately before sealing and severing. Alternatively, the second component could be injected or extruded at an angle to contact and adhere to the internal surface of the tube.

The invention will be further described with reference to the accompanying drawings and Example, in which:

Figure 1 is a general view of a unit of animal food according to the invention;

Figure 2 is a section along II—II of Figure 1; and

Figure 3 is a diagram showing how such units of food may be produced.

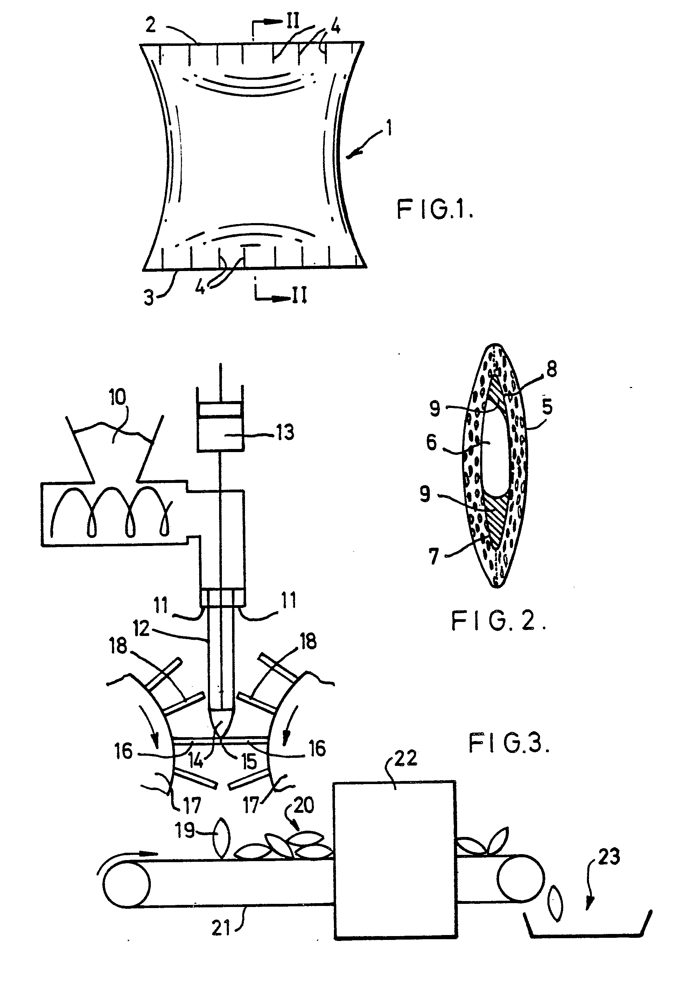

The unit piece 1 of animal food is generally square, with two parallel straight sealed edges 2 and 3, crimped at 4. It is formed by sealing and severing a tube (see below) and thus adopts a cushion shape, as shown in Figure 1.

As shown in Figure 2, each unit consists of a hard outer closed shell 5 of a first food formulation defining an internal space 6, in this case partly filled at 7 and 8 with a suitable softer second food formulation 9.

This product can be made by extruding a moist mix 10 of the first food formulation by a screw extruder through a circular die orifice at 11 to form a tube 12. Simultaneously, a mix 13 of the second formulation is extruded into the interior of the tube 12 where it passes to location 14. This is defined by the sealing line 15 induced by the action of opposed blades 16, mounted on corotating rollers 17. As these rotate, blades 18 seal and sever at a different location in relation to the tube, which is extruded at the blade peripheral speed. Thus a succession of units 19 accumulate at 20 on conveyor 21 by which they pass through oven 22 to accumulate at 23 as product.

A specific Example of the invention was carried out as follows.

A first food formulation was prepared from a mixture of maize flour (43.5 parts by weight), wheat flour (28.5 parts by weight) greaves meal (19.5 p.b.w.) and soya flour with the addition of suitable dyestuffs, vitamins, minerals, (5 p.b.w.) vegetable flavourings and salts (total 3.5 p.b.w.). "Greaves" are the residular parts of waste meat from which the fat has been rendered. 70 parts of this mixture were mixed with 30 parts of water.

This was mixed, and extruded under an increased pressure, a temperature above 100°C and high-shear conditions through circular die 11. Some of the water evaporated off, and the material expanded at the die lip, due to release of pressure, thus giving it a slightly porous consistency and a water content of about 23%.

A second food formulation was simultaneously injected to accumulate at 14. It consisted of 50% by weight of glucose syrup, 80% solid content and 63% dextrose equivalent; 24% by weight sucrose; 10% by weight tallow; 10% by weight pregelatinised starch; 5% by weight glycerine, and trace amounts, ca. 1% of colouring and potassium sorbate. Various modifications in which 2 to 10% by weight of this second formulation were replaced by protein meal, cheese powder, vegetable powders, meat or yeast extracts, vitamins, etc, alone or in combination were also tried. In each case 75% by weight of first formulation and 25% of second were used.

The crimping, sealing and severing took place under sufficient pressure to cause the first formulation to adhere to itself and seal.

The separate units were dried and cooked to a total 10% moisture content at oven 22, leaving an internal chewy material, predominantly at one end 7 of the space 6 as shown in Figure 2.

The dog food obtained rated 98% in palatability tests, i.e. 98% of dogs preferred it to a lump foodstuff of only the first formulation. It appears likely that dogs can scent the filling, although there is no pronounced different smell to a human nose. Moreover, the units were appreciably easier to break into suitable fragments, and in bulk occupied the same volume per unit cost as the known lump material.

Further details or embodiments of the invention are set out in the claims.

The product is of a different nature from known products. Thus, while it is known for example to seal foodstuffs in a pastry for human consumption, they are not dried and cooked to explicitly seal in the contents and cause voids to appear; moreover, the products do not comprise proteinaceous meal in the casing, giving its own characteristics for sealing and porosity of the shell. Also, the use of liquid into low-water content fillings, whereby water is abstracted from the less hygroscopic surrounding shell to give a more permanently crisp material has not hitherto been suggested.

## Claims

1. An animal food consisting of units comprising a first animal food formulation and a second animal food formulation of different composition, characterised in that the first animal food formulation includes a separate proteinaceous meal together with a milled cereal and is shaped as a hard closed external shell and in that the second animal food formulation is of a different degree of subdivision or consistency from the first, occupies at least part of the internal space defined by the external shell and is of a lower water content than the shell.

2. An animal food as claimed in claim 1 characterised in that the external shell is cushion-shaped with two parallel crimped and sealed edges.

3. An animal food as claimed in claim 2 characterised in that the external shell is (a) generally square with an edge length of 2 to 3 cms; (b) of maximum overall thickness from $\frac{1}{4}$ to $\frac{2}{3}$ its edge length and (c) of maximum separation between internal opposed faces of from one to four times the wall thickness.

4. An animal food as claimed in any one preceding claim characterised in that the second formulation occupies from 5% to 50% and preferably from 10% to 30% of the internal space.

5. An animal food as claimed in any one preceding claim characterised in that the first formulation comprises from 30% to 90% by weight of a milled cereal consisting of one or more of wheat flour, oat flour, maize flour and rye flour and correspondingly from 70% to 10% by weight of a proteinaceous meal consisting of one or more of animal protein meal and vegetable protein meal.

6. An animal food as claimed in claim 5 characterised in that the proteinaceous meal comprises a major proportion of one or more of meat meal, fish-meal and meat-and-bone meal and a minor proportion of soya flour.

7. An animal food as claimed in any one preceding claim characterised in that the second formulation has a powdery, liquid, gelled or gummy consistency.

8. An animal food as claimed in any one preceding claim characterised in that the second formulation forms an accumulation towards one end of the internal space.

9. An animal food as claimed in any preceding claim characterised in that the second formulation comprises a syrup or gum component.

10. An animal food as claimed in claim 9 characterised in that the syrup or gum component comprises one or more of corn syrup, sucrose, glucose and glycerine.

11. An animal food as claimed in claim 10 characterised in that it comprises one or more of (a) an animal or like protein extract chosen from meat meal, meat extract, yeast extract, and fish meal (b) a dairy product (c) a vegetable extract in liquid or powder form and (d) a flavouring, odorant or colorant.

12. A method for the production of a food, of the type in which:—

a first cereal-containing formulation is mixed with water to give an extrudable consistency; a second formulation is made up in an extrudable or injectable consistency; the first formulation is extruded as a tube into which the second formulation is extruded or injected so as to be located within the tube; and the tube and contents are passed into sealing and severing means whereby a plurality of moist external shells of the first formulation are severed from the tube and subsequently dried; characterised in that, for production of an animal food the first formulation contains a milled cereal and a separate proteinaceous meal and the water content if any of the second formulation is less than that of the first formulation whereby drying provides hard shells the softer internal formulation of which is still of lower water content than that of the shell envelope.

13. A method as claimed in claim 12 characterised in that the tube is extruded vertically downwards into sealing and severing means constituted by opposed pairs of blades with corrugated edges and protruding from parallel rollers of peripheral speed generally equal to that of the speed of movement of the extruded tube, and in that the second formulation is injected vertically downwards to arrive within the tube as an accumulation at the base of the tube above the sealing and severing means.

14. A method as claimed in claim 13 characterised in that the angle of injection is modified from the vertical so that the second formulation contacts and adheres to the internal surface of the tube.

## Patentansprüche

1. Tierfutter aus Stücken enthaltend eine erste Tierfutterzusammensetzung und eine zweite davon verschiedene Tierfutterzusammensetzung, dadurch gekennzeichnet, daß die erste Tierfutterzusammensetzung ein gesondertes eiweißhaltiges Mehl zusammen mit gemahlenem Getreide enthält und als festverschlossene äußere Schale geformt ist und daß die zweite Tierfutterzusammensetzung einen unterschiedlichen Grad der Unterteilung oder Konsistenz gegenüber der ersten hat, mindestens einen Teil des Innenraumes innerhalb der äußeren Schale einnimmt und einen geringeren Wassergehalt als die Schale hat.

2. Tierfutter nach Anspruch 1, dadurch gekennzeichnet, daß die äußere Schale kissenartig mit zwei zueinander parallelen gecrimpten und versiegelten Kanten ausgebildet ist.

3. Tierfutter nach Anspruch 2, dadurch gekennzeichnet, daß die äußere Schale

a) im wesentlichen eine Quadratform mit einer Kantenlänge von 2 bis 3 cm,

b) eine maximale Gesamtdicke von einem Viertel bis Zweidrittel der Kantenlänge und

c) einem maximalen Abstand zwischen den einander gegenüberstehenden Innenflächen vom Einfachen bis Vierfachen der Wandstärke hat.

4. Tierfutter nach einem der vorhergehenden Ansprüche, dadurch gekennzeichnet, daß die zweite Tierfutterzusammensetzung zwischen 5 und 50 %, vorzugsweise, zwischen 10 und 30 % des Innenraumes ausfüllt.

5. Tierfutter nach einem der vorhergehenden Ansprüche, dadurch gekennzeichnet, daß die erste Tierfutterzusammensetzung zwischen 30 und 90 Gewichtsprozent eines gemahlenen Getreides, bestehend aus einem oder mehreren Mehlen, wie Weizenmehl, Hafermehl, Maismehl und Roggenmehl und entsprechend zwischen 70 bis 10 Gewichtsprozent des eiweißhaltigen Mehls, bestehend aus einem oder mehreren Mehlen aus tierischem Eiweiß und/oder pflanzlichem Eiweib, umfaßt.

6. Tierfutter nach Anspruch 5, dadurch gekennzeichnet, daß das eiweißhaltige Mehl als Hauptanteil ein oder mehrere der Stoffe wie Fleischmehl, Fischmehl und Fleisch/Knochenmehl und als Nebenbestandteil Sojamehl umfaßt.

7. Tierfutter nach einem der vorhergehenden Ansprüche, dadurch gekennzeichnet, daß die zweite Tierfutterzusammensetzung eine pulverförmige, flüssige, gelartige oder gummiartige Konsistenz hat.

8. Tierfutter nach einem der vorhergehenden Ansprüche, dadurch gekennzeichnet, daß die zweite Tierfutterzusammensetzung eine Anhäufung in einem Endbereich des Innenraums bildet.

9. Tierfutter nach einem der vorhergehenden Ansprüche, dadurch gekennzeichnet, daß die zweite Tierfutterzusammensetzung eine Sirup- oder Gummikomponente umfaßt.

10. Tierfutter nach Anspruch 9, dadurch gekennzeichnet, daß die Sirup- oder Gummikomponente einen oder mehrere der Stoffe Maissirup, Kornsirup, Saccharose, Glukose und Glyzerin enthält.

11. Tierfutter nach Anspruch 10, dadurch gekennzeichnet, daß es ein oder mehrere

a) tierische oder ähnliche Eiweißextrakte, ausgewählt aus Fleischmehl, Fleischextrakt, Hefeextrakt und Fischmehl

b) ein Molkereiprodukt

c) einen flüssigen oder pulverförmigen Pflanzenextrakt und

d) einen Geschmacksstoff, Geruchsstoff oder Farbstoff enthält.

12. Verfahren zur Herstellung eines Tierfutters, wonach eine erste getreidehaltige Zusammensetzung mit Wasser gemischt wird, damit man eine extrusionsfähige Konsistenz erhält:

eine zweite Zusammensetzung ebenfalls zu einer extrusionsfähigen oder spritzfähigen Konsistenz aufbereitet wird;

die erste Zusammensetzung als Schlauch extrudiert wird, in den die zweite Zusammensetzung extrudiert oder eingespritzt wird, so daß sie innerhalb des Schlauches liegt;

der Schlauch und der Inhalt durch eine Siegel- und Schneidvorrichtung geleitet werden, wobei eine Mehrzahl von feuchten Außenschalen der ersten Zusammensetzung von dem Schlauch abgetrennt und anschließend getrocknet werden, dadurch gekennzeichnet, daß zur Herstellung eines Tierfutters die erste Zusammensetzung ein Getreidemehl und ein gesondertes eiweißhaltiges Mehl enthält und daß der Wassergehalt der zweiten Zusammensetzung kleiner als der der ersten Zusammensetzung ist, damit die Trocknung harte Schalen ergibt, deren weichere innere Zusammensetzung noch einen kleineren Wassergehalt als die äußere Schale hat.

13. Verfahren nach Anspruch 12, dadurch gekennzeichnet, daß der Schlauch vertikal nach unten in eine Siegel- und Schneidvorrichtung extrudiert wird, deren einander gegenüberstehende Messer mit gewellten Kanten von parallelen Walzen vorstehen, deren Umfangsgeschwindigkeit gleich der Bewegungsgeschwindigkeit des extrudierten Schlauches ist, und daß die zweite Zusammensetzung in vertikaler Richtung derart nach unten eingespritzt wird, daß die innerhalb des Schlauches als eine Ansammlung am Fuß des Schlauches oberhalb der Siegel- und Schneidvorrichtung ankommt.

14. Verfahren nach Anspruch 13, dadurch gekennzeichnet, daß der Einspritzwinkel gegenüber der Vertikalen derart ausgerichtet wird, daß die zweite Zusammensetzung die Innenfläche des Schlauches berührt und daran festhaftet.

**Revendications**

1. Aliment pour animaux composé d'éléments comprenant une première formulation d'aliment pour animaux et une seconde formulation d'aliment pour animaux de composition différente, caractérisé en ce que la première formulation d'aliment pour animaux comporte une poudre protéinée séparée ainsi qu'une céréale broyée et est façonnée sous forme de coque extérieure dure fermée et en ce que la seconde formulation d'aliment pour animaux diffère de la première par le degré de subdivision ou par la consistance, occupe au moins une partie de l'espace intérieur défini par la coque extérieure et a une plus faible teneur en eau que la coque.

2. Aliment pour animaux selon la revendication 1, caractérisé en ce que la coque extérieure est en forme de coussin, présentant deux bords parallèles gaufrés et fermés hermétiquement.

3. Aliment pour animaux selon la revendication 2, caractérisé en ce que la coque extérieure est (a) de forme générale carrée avec une longueur de bord de 2 à 3 cm; (b) d'une épaisseur globale maximale représentant 1/4 à 2/3 de sa longueur de bord et (c) d'un écartement maximum entre faces intérieures opposées représentant une à quatre fois l'épaisseur de paroi.

4. Aliment pour animaux selon l'une quelconque des revendications précédentes, caractérisé en ce que la seconde formulation occupe de 5 à 50% et de préférence de 10 à 30% de l'espace intérieur.

5. Aliment pour animaux selon l'une quelconque des revendications précédentes, caractérisé en ce que la première formulation comprend 30 à 90% en poids d'une céréale broyée composée d'une ou plusieurs des farines de froment, d'avoine, de maïs et de seigle et de manière correspondante de 70 à 10% en poids d'une poudre protéinée composée d'une ou plusieurs poudres de protéines animales et de protéines végétales.

6. Aliment pour animaux selon la revendication 5, caractérisé en ce que la poudre protéinée comprend une proportion majeure d'une ou plusieurs poudres de viande, de poisson et de viande et os et une proportion mineure de farine de soja.

7. Aliment pour animaux selon l'une quelconque des revendications précédentes, caractérisé en ce que la seconde formulation a une consistance poudreuse, liquide, gélifiée ou gommeuse.

8. Aliment pour animaux selon l'une quelconque des revendications précédentes, caractérisé en ce que la seconde formulation forme un dépôt accumulé vers une extrémité de l'espace interne.

9. Aliment pour animaux selon l'une quelconque des revendications précédentes, caractérisé en ce que la seconde formulation comprend un constituant du type sirop ou gomme.

10. Aliment pour animaux selon la revendication 9, caractérisé en ce que le constituant du type sirop ou gomme est constitué par du sirop de glucose, du saccharose, du glucose et de la glycérine.

11. Aliment pour animaux selon la revendication 10, caractérisé en ce qu'il comprend isolément ou en combinaison (1) un extrait de protéine animale ou analogue choisi parmi la poudre de viande, l'extrait de viande, l'extrait de levure et la poudre de poisson (b) un produit laitier (v) un extrait végétal sous forme de liquide ou de poudre (d) un agent aromatisant, odoriférant ou colorant.

12. Procédé de fabrication d'un aliment, du type dans lequel:

on mélange une première formulation contenant une céréale avec de l'eau pour lui conférer une consistance se prêtant au boudinage; on prépare une seconde formulation à une consistance se prêtant au boudinage ou à l'injection; ou boudine la première formulation sous forme de tube dans lequel on introduit par boudinage ou injection la seconde formulation de façon qu'elle soit située dans le tube; et l'on fait pénétrer le tube et son contenu dans des moyens de fermeture étanche et de sectionnement de sorte qu'une série de coques extérieures humides en la première formulation sont détachées du tube et ultérieurement séchées; caractérisé en ce que, pour la fabrication d'un aliment pour animal la première formulation contient une céréale broyée et une poudre protéinée séparée et la teneur en eau éventuelle de la seconde formulation est inférieure à celle de la première formulation, de sorte que le séchage fournit des coques dures dont la formulation intérieure plus molle a encore une teneur en eau inférieure à celle de l'enveloppe constituée par la coque.

13. Procédé selon la revendication 12, caractérisé en ce qu'on fait pénétrer le tube par boudinage vertical vers le bas dans des moyens de fermeture étanche et de sectionnement constitués par des paires de lames opposées à bords ondulés saillant sur des rouleaux parallèles à vitesse périphérique dans l'ensemble égale à la vitesse de mouvement du tube boudiné, et en ce que la seconde formulation est injectée verticalement vers le bas pour arriver à l'intérieur du tube sous forme de dépôt accumulé à la base du tube au-dessus des moyens de fermeture étanche et de sectionnement.

14. Procédé selon la revendication 13, caractérisé en ce que l'angle d'injection est modifié à partir de la verticale, en sorte que la seconde formulation rencontre la surface intérieure du tube et y adhère.

0 088 574

FIG.1.

FIG. 2.

FIG.3.